# EUROPÄISCHE PATENTSCHRIFT

(11) **EP 1 292 419 B1**
(45) Veröffentlichungstag und Bekanntmachung des Hinweises auf die Patenterteilung: **10.11.2004**
(21) Anmeldenummer: 01951413.2
(22) Anmeldetag: 20.06.2001
(51) Int. Cl.: B23G 5/04

(54) **VERFAHREN ZUR HERSTELLUNG EINER MUTTER, GEWINDEBOHRER ZUR DURCHFÜHRUNG DES VERFAHRENS UND NACH DIESEM VERFAHREN HERGESTELLTE MUTTER**
METHOD FOR PRODUCING A NUT, SCREW TAP FOR CARRYING OUT SAID METHOD AND NUT PRODUCED ACCORDING TO SAID METHOD
PROCEDE DE PRODUCTION D'UN ECROU, TARAUD PERMETTANT LA MISE EN OEUVRE DE CE PROCEDE ET ECROU AINSI OBTENU

(30) Priorität: 21.06.2000 DE 10030492
(43) Veröffentlichungstag der Anmeldung: 19.03.2003
(73) Patentinhaber: Erich Neumayer GmbH & Co. KG, 77756 Hausach (DE)
(72) Erfinder: VOGEL, Manfred, 77876 Kappelrodeck (DE)
(74) Vertreter: von Puttkamer, Nikolaus, Dipl.-Ing.
(86) Internationale Anmeldenummer: PCT/DE2001/002287
(87) Internationale Veröffentlichungsnummer: WO 2001/098011

(56) Entgegenhaltungen:
- EP-A- 0 460 335
- DE-A- 19 532 709
- GB-A- 335 578
- GB-A- 1 045 794
- US-A- 5 123 793
- US-A- 5 735 658

## Beschreibung

Die vorliegende Erfindung betrifft ein Verfahren zur Herstellung einer Mutter nach dem Oberbegriff des Patentanspruches 1 , einen Gewindebohrer zur Durchführung des Verfahrens nach dem Oberbegriff des Patentanspruches 5 sowie eine nach dem Verfahren hergestellte Mutter nach dem Oberbegriff des Patentanspruches 15.

Aus der DE 195 32 709 ist eine durch Massiv-Umformen hergestellte Mutter bekannt, die einen Antriebsbereich zum Angriff eines Werkzeuges, einen Bereich zur Anlage an einem Bauteil sowie einen Klemmbereich aufweist, der in Längsrichtung der Mutter geschlitzt ist, so dass zwischen jeweils zwei Schlitzen in Umfangsrichtung Klemmzungen angeordnet sind. Sowohl der Klemmbereich mit den Schlitzen und den Klemmzungen als auch der Antriebsbereich werden durch Massiv-Umformen, wie beispielsweise Kalt- und/oder Warmfließpressen, hergestellt. Das Innengewinde der Mutter verläuft entlang des Antriebsbereiches mit konstantem und zumindest über einen Teil der axialen Erstreckung des Klemmbereiches mit sich mit zunehmendem Abstand von dem Antriebsbereich verkleinernden Durchmesser.

Das Gewinde einer derartigen Mutter wird üblicherweise auf NC-Gewindeschneidemaschinen hergestellt, wobei zunächst die Bohrung im Antriebsbereich zylindrisch und im Klemmbereich konisch ausgedreht wird und dann das Gewinde auf der NC-Maschine eingeschnitten wird. Es ist ohne weiteres erkennbar, dass ein derartiges Herstellungsverfahren kompliziert und teuer ist. Bei beiden Operationen muß die Werkzeugbewegung dieser Konizität konform erfolgen.

Die Aufgabe der vorliegenden Erfindung besteht daher darin, ein derartiges Verfahren dahingehend zu verbessern, dass es wesentlich einfacher ausführbar ist und dass nach diesem Verfahren Muttern daher sehr viel billiger herstellbar sind. Außerdem soll ein Gewindebohrer zur Durchführung des Verfahrens geschaffen werden.

Die genannte Aufgabe wird durch ein Verfahren mit den Merkmalen des Patentanspruches 1 gelöst. Die nach dem erfindungsgemäßen Verfahren hergestellten Muttern sind durch die Merkmale des Patentanspruches 15 gekennzeichnet. Ein Gewindebohrer zur Durchführung des Verfahrens weist die Merkmale des Patentanspruches 5 auf.

Der wesentliche Vorteil der vorliegenden Erfindung besteht darin, dass die im Zusammenhang mit dem genannten Stand der Technik erforderlichen komplizierten Schritte zum konischen Ausdrehen des Klemmbereiches und zur Einbringung des Innengewindes mit einer NC-Maschine entfallen können, weil ein spezieller Gewindebohrer zur Herstellung des Innengewindes verwendet wird, der bereits konisch geformt ist und in eine im Bereich des Klemmbereiches und des Antriebsbereiches verlaufende zylindrische Bohrung eingebracht wird. Genauer gesagt ist der im Zusammenhang mit dem erfindungsgemäßen Verfahren verwendete Gewindebohrer so ausgestaltet, dass er zur Herstellung des konischen Bereiches des Innengewindes im Klemmbereich durch einfaches Eindrehen des Gewindebohrers bis zu einer vorgegebenen axialen Position neben einem zylindrischen Gewinde-Schneideabschnitt zur Herstellung des zylindrischen Innengewindes im Antriebsbereich einen speziellen konischen Gewinde-Schneideabschnitt aufweist. Von besonderer Bedeutung ist es dabei, daß der Gewindebohrer lediglich eine einfache gerade Vorwärtsbewegung ausführt.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Figur 1: einen Längsschnitt durch eine nach dem erfindungsgemäßen Verfahren hergestellte Mutter;
- Figur 2: eine Ansicht auf die Mutter der Figur 1 von der der Unterlage abgewandten Seite her;
- Figur 3: die Seitenansicht eines im Zusammenhang mit dem erfindungsgemäßen Verfahren verwendeten erfindungsgemäßen Gewindebohrers;
- Figur 4: einen Schnitt durch den die Gewindebohrer der Figur 3 entlang der Linie VI-VI;
- Figur 5: eine vergrößerte Darstellung der verschiedenen und
- Figur 6: den in eine Mutter bis zur vorgegebenen Position eingedrehten Gewindebohrer.

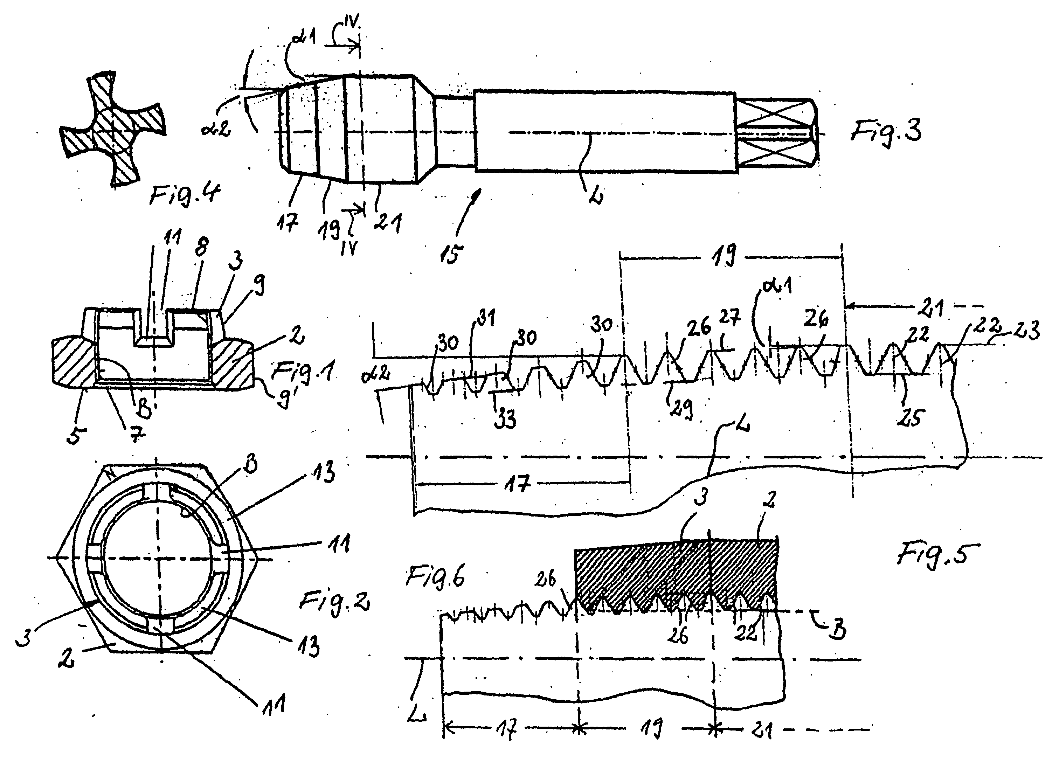

Die in der Figur 1 dargestellte Mutter besteht im wesentlichen aus einem Antriebsbereich 2 und einem Klemmbereich 3, die einstückig miteinander hergestellt sind. An der einer Unterlage zugewandten Seite, d.h. also an der dem Klemmbereich 3 abgewandten Seite weist die Mutter einen Auflagebereich 5 auf. Der zylindrische Gewindeabschnitt des Antriebsbereiches 2 der Mutter ist mit 7 bezeichnet.

Der Antriebsbereich 2 weist radial außen regelmäßige Verformungen 9' auf, die z.B. einen Mehrkant bilden und zum Angriff eines Werkzeuges vorgesehen sind, mit dessen Hilfe die Mutter auf einem Bolzen oder dergleichen verdrehbar ist.

Der Klemmbereich 3, der sich axial an den Antriebsbereich 2 anschließt, ist hülsenartig ausgebildet und an seinem Außenumfang von einer konisch bzw. kegelig verlaufenden Mantelfläche 9 begrenzt, deren Kegelspitze dem Auflagebereich 5 abgewandt ist. Der Klemmbereich 3 weist mehrere, über den Umfang verteilte Schlitze oder axial gerichtete Ausnehmungen 11 auf, die sich bis zum Antriebsbereich 2 axial erstrecken. Die jeweils zwischen zwei Schlitzen gebildeten Klemmzungen sind mit 13 bezeichnet. Der konische Gewindeabschnitt des Klemmbereiches 3 ist mit 8 bezeichnet.

Es wurde bereits darauf hingewiesen, dass üblicherweise die Gewindeabschnitte 7 und 8 dadurch hergestellt werden, dass zunächst im Antriebsbereich 2 eine zylindrische Bohrung und im Klemmbereich 3 eine konische Bohrung eingebracht werden und dass danach mit Hilfe einer NC-Gewindeschneidmaschine der zylindrische Gewindeabschnitt 7 und der konische Gewindeabschnitt 8 hergestellt werden.

Gemäß dem vorliegenden Verfahren werden die Gewindeabschnitte 7 und 8 nach Herstellung nur einer einzigen axial verlaufenden zylindrischen Bohrung B dadurch hergestellt, dass ein gemäß Figur 3 ausgebildeter Gewindebohrer 15 von der Seite des Auflagebereiches 5 her in die zylindrische Bohrung B bis zu einer vorbestimmten Position in einer im folgenden näher erläuterten Weise eingedreht wird. Die Bohrung kann vorzugsweise durch Umformen hergestellt werden.

Der Gewindebohrer 15 weist drei verschiedenen Gewinde-Schneideabschnitte auf, die in axialer Richtung von der Vorderseite her gesehen nebeneinander angeordnet sind. Der vorderste Zentrier-Schneideabschnitt 17 wird zuerst in die zylindrische Bohrung der Mutter eingeführt und dient dazu, den Gewindebohrer 15 in Bezug auf die zylindrische Bohrung B der Mutter zu zentrieren und das Gewinde im Abschnitt 21 vorzuschneiden. An den Zentrier-Schneideabschnitt 17 schließt sich der Schneideabschnitt 19 an, der zur Herstellung des konischen des Innengewindes des Klemmbereiches 3 dient. Neben dem Schneideabschnitt 19 befindet sich an der dem Zentrier-Schneideabschnitt 17 abgewandten Seite ein dritter Schneideabschnitt 21, der zur Herstellung des zylindrischen Innengewindeabschnittes 7 im Antriebsbereich 2 der Mutter dient.

Die genannten Schneideabschnitte 17, 19 und 21 sind in der Figur 5 in stark vergrößerter Form dargestellt. Demgemäß weist der zur Herstellung des zylindrischen Innengewindeabschnittes 7 im Antriebsbereich 2 dienende Schneideabschnitt 21 Zähne 22 auf, deren Kopfkreise 23 und Fußkreise 25 in der Längsrichtung L verlaufen.

Die Zähne des Schneideabschnittes 19 sind mit 26 bezeichnet. Sie sind so ausgebildet, dass ihre Kopfkreise 27 jeweils auf einer gedachten Mantelfläche liegen, die unter einem Winkel α1 zur Längsrichtung L geneigt ist, so dass die Zähne 26 zur Vorderseite des Gewindebohrers 15 hin jeweils eine kleinere Zahnhöhe besitzen. Vorzugsweise sind auch die Fußkreise 29 der Zähne 26 des Schneideabschnittes 19 auf einer unter einem Winkel α1 in Bezug auf die axiale Richtung L geneigten Mantelfläche angeordnet.

Schließlich sind die Zähne 30 des Zentrier-Schneideabschnittes 17 so beschaffen, dass ihre Kopfkreise 31 auf einer gedachten Mantelfläche liegen, die unter einem Winkel α2 zur Längsachse des Gewindebohrers 15 geneigt ist, wobei der Winkel α2 vorzugsweise größer als der Winkel α1 ist. Die Zähne 30 weisen vorzugsweise eine in Richtung zur Vorderseite hin kleiner werdende Zahnhöhe auf. Vorzugsweise sind auch die jeweiligen Fußkreise 33 der Zähne 30 auf einer gedachten, unter einem Winkel in Bezug auf die Längsachse L geneigten Mantelfläche angeordnet, der beispielsweise dem Winkel α1 entspricht.

Gemäß dem erfindungsgemäßen Verfahren wird der Gewindebohrer 15 in eine durchgehende, d.h. also sowohl im Klemmbereich 3 als auch im Antriebsbereich 2 zylindrisch verlaufende Bohrung einer in der Gewindeschneidemaschine zentrierten und eingspannten Mutter bis zu einer axialen Position eingedreht, bis sich der Schneideabschnitt 19 an der gewünschten Position des Klemmbereiches 3 und der Schneideabschnitt 21 an der gewünschten Position des Antriebsbereiches 2 befinden. Der Schneideabschnitt 17 ragt dann zumindest teilweise über den Klemmbereich 3 der Mutter hinaus. Nach Erreichen der genannten vorbestimmten Position wird damit das gewünschte konische Gewinde im Klemmbereich 3 erzeugt und bilden sich die Zähne 22 des Schneideabschnittes 21 genau im Antriebsbereich 2 ab. Dieser Zustand ist in der Figur 6 dargestellt. Schließlich wird der Gewindebohrer 15 aus der vorbestimmten Position zurückgedreht und aus der Mutter entfernt. Beim Eindrehen des Gewindebohrers 15 bis zur vorbestimmten Position dienen die Zähne 30 und/oder 26 der Schneideabschnitte 17 und 19 zum Vorschneiden der Zähne des Innengewindes 7 des Antriebsbereiches. Entsprechend dienen dabei die Zähne 30 des Abschnittes 17 zum Vorschneiden der Zähne des Innengewindes 8 des Klemmbereiches.

Es wird darauf hingewiesen, dass die Schneideabschnitte 19 und 21 so bemessen sein können, dass in der vorbestimmten Position auch ein Teil der Zähne 22 des Schneideabschnittes 21 in den Klemmbereich 3 eingedrungen sind, so dass sich der hergestellte zylindrische Gewindeabschnitt 7 über den Antriebsbereich 2 hinaus, teilweise in den Klemmbereich 3, hineinerstreckt. Umgekehrt ist es auch denkbar, die Schneideabschnitte 19 und 21 so zu bemessen, dass sich in der vorbestimmten Position ein Teil der Zähne 26 des Schneideabschnittes 19 noch in den Antreibsbereich 2 eindringen.

Es wird darauf hingewiesen, dass unter dem Begriff "konisch" alle möglichen, sich zur Vorderseite des Gewindebohrers 15 verjüngenden Formgebungen verstanden werden.

## Patentansprüche

1. Verfahren zur Herstellung einer Mutter, die einen Antriebsbereich (2) und einen Klemmbereich (3) aufweist, die einstückig miteinander hergestellt sind, wobei die Mutter eine den Klemmbereich (3) und den Antriebsbereich (2) durchsetzende Bohrung (B) mit einem im Antriebsbereich (2) zumindest teilweise zylindrischen Gewindeabschnitt (7) und einem im Klemmbereich (3) zumindest teilweise konischen Gewindeabschnitt (8) aufweist, **dadurch gekennzeichnet, dass** die den Klemmbereich (3) und den Antriebsbereich (2) durchsetzende Bohrung (B) als zylindrische Bohrung (B) hergestellt wird und dass in diese zylindrische Bohrung (B) ein Gewindebohrer (15) bis zu einer vorbestimmten Position eingedreht wird, der in axialer Richtung von seiner Vorderseite her gesehen nebeneinander einen Zentrier-Schneideabschnitt (17), einen sich daran anschließenden Schneideabschnitt (19) zur Herstellung des konischen Innengewindeabschnittes (8) des Klemmbereiches (3) und einen sich daran anschließenden Schneideabschnitt (21) zur Herstellung des zylindrischen Innengewindeabschnittes (7) im Antriebsbereich (2) aufweist, wobei der Schneideabschnitt (21) zur Herstellung des zylindrischen Innengewindeabschnittes (7) im Antriebsbereich (2) Zähne (22) aufweist, die in der Richtung der Längsrichtung (L) verlaufen, der Schneideabschnitt (19) zur Herstellung der konischen Innengewindeabschnitte (8) des Klemmbereiches (3) Zähne (26) aufweist, die unter einem ersten Winkel (α1) zur Längsrichtung (L) schräg verlaufen, und der Zentrier-Schneideabschnitt (17) Zähne (30) aufweist, die unter einem zweiten Winkel (α2) schräg zur Längsrichtung (L) verlaufen, wobei der Gewindebohrer (15) in einem ersten Arbeitsschritt bis zur vorbestimmten Position in die Bohrung (B) eingedreht wird, wobei sich die Zähne (22) des Schneideabschnittes (21) zur Herstellung des zylindrischen Innengewindeabschnittes (7) im Antriebsbereich (2) und die Zähne (26) des Schneideabschnittes (19) zur Herstellung des konischen Innengewindeabschnittes (8) des Klemmbereiches (3) in dem Antriebsbereich (2) bzw. in dem Klemmbereich (3) abbilden, und wobei der Gewindebohrer (15) in einem anschließenden Arbeitsschritt aus der Bohrung (B) der Mutter zurückgedreht wird.

2. Verfahren nach Anspruch 1, **dadurch gekennzeichnet, dass** in der vorbestimmten Position die Zähne (22) des Schneideabschnittes (21) zur Herstellung des zylindrischen Innengewindeabschnittes (7) im gesamten Antriebsbereich (2) angeordnet sind und die Zähne (26) des Schneideabschnittes (19) zur Herstellung des konischen Innengewindeabschnittes (8) im gesamten Klemmbereich (3) angeordnet sind.

3. Verfahren nach Anspruch 1, **dadurch gekennzeichnet, dass** in der vorbestimmten Position die Zähne (22) des Schneideabschnittes (21) zur Herstellung des zylindrischen Innengewindeabschnittes (7) im Antriebsbereich (2) auch teilweise in den Klemmbereich (3) eingreifen.

4. Verfahren nach Anspruch 1, **dadurch gekennzeichnet, dass** die Zähne (26) des Schneideabschnittes (19) zur Herstellung des konischen Innengewindeabschnittes (8) des Klemmbereiches (3) in der vorbestimmten Position zumindest teilweise auch in den Antriebsbereich (2) eingreifen.

5. Gewindebohrer zur Durchführung des Verfahrens nach einem der Ansprüche 1 bis 4, **dadurch gekennzeichnet, dass** er von seiner Vorderseite aus gesehen hintereinander einen Zentrier-Schneideabschnitt (17), daran anschließend einen Schneideabschnitt (19) zur Herstellung des konischen Innengewindeabschnittes (8) des Klemmbereiches (3) und daran anschließend einen Schneideabschnitt (21) zur Herstellung des zylindrischen Innengewindeabschnittes (7) im Antriebsbereich (2) aufweist, wobei die Zähne (22) des Schneideabschnittes (21) zur Herstellung des zylindrischen Innengewindeabschnittes (7) im Antriebsbereich (2) in der Längsrichtung (L) des Gewindebohrers (15) verlaufen, die Zähne (26) des Schneideabschnittes (19) zur Herstellung des konischen Innengewindeabschnittes (8) des Klemmbereiches (3) entlang einer sich zur Vorderseite verjüngenden Linie verlaufen und die Zähne (30) des Zentrier-Gewindeabschnittes (17) entlang einer weiteren sich zur Vorderseite hin verjüngenden Linie verlaufen.

6. Gewindebohrer nach Anspruch 5, **dadurch gekennzeichnet, dass** die Zähne (22) des Schneideabschnittes (21) zur Herstellung des zylindrischen Geindeabschnittes (7) des Antriebsbereiches (2) in der Längsrichtung (L) des Gewindebohrers (15) verlaufende Kopfkreise (23) und Fußkreise (25) aufweisen.

7. Gewindebohrer nach Anspruch 5 oder 6, **dadurch gekennzeichnet, dass** die Zähne (26) des Schneideabschnittes (19) zur Herstellung des konischen Gewindebereiches (8) des Klemmbereiches (3) Kopfkreise (27) aufweisen, die auf einer gedachten Mantelfläche liegen, die unter einem ersten Winkel (α1) zur Längsrichtung (L) des Gewindebohrers (15) geneigt ist.

8. Gewindebohrer nach Anspruch 7, **dadurch gekennzeichnet, dass** die Zahnhöhe der Zähne (26) des Schneideabschnittes (19) zur Herstellung des konischen Gewindeabschnittes (8) des Klemmbereiches (3) zur Vorderseite des Gewindebohrers (15) hin kleiner werden.

9. Gewindebohrer nach Anspruch 7, **dadurch gekennzeichnet, dass** die Fußkreise (29) der Zähne (26) des Schneideabschnittes (19) Zur Herstellung des konischen Gewindeabschnittes (8) des Klemmbereiches (3) auf einer unter einem ersten Winkel (α1) in Bezug auf die Längsrichtung (L) des Gewindebohrers geneigten Mantelfläche angeordnet sind.

10. Gewindebohrer nach einem der Ansprüche 6 bis 9, **dadurch gekennzeichnet, dass** die Zähne (30) des Zentrier-Schneideabschnittes (17) Kopfkreise (31) besitzen, die auf einer gedachten Mantelfläche liegen, die unter einem zweiten Winkel (α2) zur Längsrichtung (L) des Gewindebohrers (15) geneigt ist.

11. Gewindebohrer nach Anspruch 10, **dadurch gekennzeichnet, dass** der zweite Winkel (α2) größer als der erste Winkel (α1) ist.

12. Gewindebohrer nach Anspruch 10 oder 11, **dadurch gekennzeichnet, dass** die Zähne (30) des Zentrier-Schneideabschnittes (17) eine zur Vorderseite hin abnehmende Zahnhöhe aufweisen.

13. Gewindebohrer nach einem der Ansprüche 10 bis 12, **dadurch gekennzeichnet, dass** die Fußkreise (33) der Zähne (30) des Zentrier-Schneideabschnittes (17) auf einer gedachten Mantelfläche liegen, die unter einem dritten Winkel in Bezug auf die Längsrichtung (L) des Gewindebohrers (15) geneigt ist.

14. Gewindebohrer nach Anspruch 13, **dadurch gekennzeichnet, dass** der dritte Winkel dem Winkel (α1) entspricht.

15. Mutter, hergestellt nach dem Verfahren gemäß einem der Ansprüche 1 bis 4, **dadurch gekennzeichnet, dass** sie einen Klemmbereich (3), einem mit dem Klemmbereich (3) einstückig verbundenen Antriebsbereich (2) und einen an der dem Klemmbereich (3) abgewandten Seite des Antriebsbereiches (2) angeordneten Auflagebereich (5) aufweist, wobei in einer Bohrung (B) im Bereich des Antriebsbereiches (2) ein sich zumindest teilweise über den Antriebsbereich (2) erstreckender zylindrischer Innengewindeabschnitt (7) und im Klemmbereich (3) ein zumindest teilweise über den Klemmbereich (3) verlaufender konischer Innengewindeabschnitt (8) angeordnet sind, die durch Eindrehen eines Gewindebohrers (15) gemäß einem der Ansprüche 5 bis 13 in eine zylindrische Bohrung (B) bis zu einer vorbestimmten Position in einem Arbeitsschritt hergestellt sind wobei der Klemmbereich (3) hülsenartig ausgebildet und an seinem Außenumfang von einer konisch bzw. kegelig verlaufenden Mantelfläche (9) begrenzt ist, deren Spitze dem Auflagebereich (5) abgewandt ist und wobei der Klemmbereich mehrere über den Umfang verteilte axial gerichtete Ausnehmungen (11) aufweist, die sich zumindest bis zum Antriebsbereich (2) axial erstrecken.

16. Mutter nach Anspruch 15, **dadurch gekennzeichnet, dass** der Antriebsbereich (2) radial außen regelmäßige Verformungen (9') besitzt, an denen zum Verdrehen der Mutter auf einem Bolzen ein Werkzeug ansetzbar ist.

## Claims

1. A method for the manufacture of a nut comprising a drive region (2) and a clamping region (3), which are manufactured in one piece with one another, the nut comprising a bore (B) passing through the clamping region (3) and the drive region (2) and having a threaded portion (7) at least partially cylindrical in the drive region (2) and a threaded portion (8) at least partially conical in the clamping region (3),
**characterised in that** the bore (B) passing through the clamping region (3) and the drive region (2) is manufactured as a cylindrical bore (B)
**and in that** into this cylindrical bore (B) is screwed a screw tap (15) up to a predetermined position, which, in the axial direction seen from its front side, comprises next to one another a centring cutting portion (17), a cutting portion (19) connected thereto for producing the conical internal screw thread portion (8) of the clamping region (3) and a cutting portion (21) connected thereto for producing the cylindrical internal screw thread portion (7) in the drive region (2),
whereby the cutting portion (21) for producing the cylindrical internal screw thread portion (7) in the drive region (2) comprises teeth (22) which run in the direction of the longitudinal direction (L), the cutting portion (19) for producing the conical internal screw thread portions (8) of the clamping region (3) comprise teeth (25) which run obliquely by a first angle (α1) to the longitudinal direction (L), and the centring cutting portion (17) comprises teeth (30) which run at a second angle (α2) obliquely to the longitudinal direction (L),
whereby the screw tap (15) is screwed into the bore (B) in a first working step to the predetermined position, whereby the teeth (22) of the cutting portion (21) for producing the cylindrical internal screw thread portion (7) are formed in the drive region (2) and the teeth (26) of the cutting portion (19) for producing the conical internal screw thread portion (8) of the clamping region (3) are produced in the drive region (2) or in the clamping region (3), and whereby the screw tap (15) is screwed out of the bore (B) of the nut in a subsequent working step.

2. A method according to Claim 1,
c**haracterised in that** in the predetermined position the teeth (22) of the cutting portion (21) for the production of the cylindrical internal screw thread portion (7) are disposed in the entire drive region (2) and the teeth (26) of the cutting portion (19) for producing the conical internal screw thread portion (8) are disposed in the entire clamping region (3).

3. A method according to Claim 1,
**characterised in that** in the predetermined position the teeth (22) of the cutting portion (21) for producing the cylindrical internal screw thread portion (7) in the drive region (2) also partially engage into the clamping region (3).

4. A method according to Claim 1,
**characterised in that** the teeth (26) of the cutting portion (19) for producing the conical internal screw thread portion (8) of the clamping region (3) in the predetermined position also engage at least partially into the drive region (2).

5. A screw tap for performing the method according to one of Claims 1 to 4,
**characterised in that** it comprises, seen from its front side, one after the other a centring cutting portion (17), connected thereto a cutting portion (19) for producing the conical internal screw thread portion (8) of the clamping region (3) and connected thereto a cutting portion (21) for producing the cylindrical internal screw thread portion (7) in the drive region (2), wherein the teeth (22) of the cutting portion (21) for producing the cylindrical internal screw thread portion (7) in the drive region (2) run in the longitudinal direction (1) of the screw tap (15), the teeth (26) of the cutting portion (19) for producing the conical internal screw thread portion (8) of the clamping region (3) run along a line tapering toward the front side and the teeth (30) of the centring screw thread portion (17) run along another line tapering toward the front side.

6. A screw tap according to Claim 5,
**characterised in that** the teeth (22) of the cutting portion (21) for producing the cylindrical threaded portion (7) of the drive region (2) have tip circles (23) and root circles (25) running in the longitudinal direction (L) of the screw tap (15).

7. A screw tap according to Claim 5 or 6,
**characterised in that** the teeth (26) of the screw portion (19) for producing the conical screw thread region (8) of the clamping region (3) comprise tip circles (27), which lie on an imaginary lateral surface which is inclined by a first angle (α1) to the longitudinal direction (L) of the screw tap (15).

8. A screw tap according to Claim 7,
**characterised in that** the tooth height of the teeth (26) of the cutting portion (19) for producing the conical screw thread portion (8) of the clamping region (3) become smaller towards the front side of the screw tap (15).

9. A screw tap according to Claim 7,
**characterised in that** the root circles (29) of the teeth (26) of the cutting portion (19) for producing the conical screw thread portion (8) of the clamping region (3) are disposed on a lateral surface inclined by a first angle (α1) with respect to the longitudinal direction (L) of the screw tap.

10. A screw tap according to one of Claims 6 to 9,
**characterised in that** the teeth (30) of the centring cutting portion (17) have tip circles (31), which lie on an imaginary lateral surface which is inclined by a second angle (α2) to the longitudinal direction (L) of the screw tap (15).

11. A screw tap according to Claim 10,
**characterised in that** the second angle (α2) is larger than the first angle (α1).

12. A screw tap according to Claim 10 or 11,
**characterised in that** the teeth (30) of the centring cutting portion (17) comprise a tooth height that decreases towards the front side.

13. A screw tap according to one of Claims 10 to 12,
**characterised in that** the root circles (33) of the teeth (30) of the centring cutting portion (17) lie on an imaginary lateral surface, which is inclined by a third angle in relation to the longitudinal direction (L) of the screw tap (15).

14. A screw tap according to Claim 13,
**characterised in that** the third angle corresponds to the angle (α1).

15. A nut, manufactured in accordance with the method according to one of Claims 1 to 4,
**characterised in that** it comprises a clamping region (3), a drive region (2) connected in one piece to the clamping region and a support region (5) disposed at the side of the drive region (2) remote from the clamping region (3), wherein in a bore (B) in the region of the drive region (2) a cylindrical internal screw thread portion (7) extending at least partially over the drive region (2) and in the clamping region (3) a conical internal screw thread portion (8) running at least partially over the clamping region (3) are disposed, which are produced by screwing a screw tap (15) according to one of Claims 3 to 15 into a cylindrical bore (B) right to a predetermined position in one working step, wherein the clamping region (3) has a shell-shaped construction and at its outer circumference is limited by a conical or tapering lateral surface (9), the point of which faces away from the support region (5), and wherein the clamping region comprises several axially directed recesses (11) distributed over the periphery, which extend axially at least to the drive region (2).

16. A nut according to Claim 15,
**characterised in that** the drive region (2) has radially outwardly regular formed parts (9) on which a tool can be fixed to twist the nut onto a bolt.

## Revendications

1. Procédé de fabrication d'un écrou comprenant une portion d'entraînement (2) et une portion de serrage (3) réalisées d'une seule pièce l'une avec l'autre, l'écrou comportant un trou (B) qui traverse la portion de serrage (3) et la portion d'entraînement (2) et comprend un tronçon taraudé (7), au moins partiellement cylindrique dans la portion d'entraînement (2), et un tronçon taraudé (8), au moins partiellement conique dans la portion de serrage (3), **caractérisé par le fait que** le trou (B) traversant la portion de serrage (3) et la portion d'entraînement (2) est conformé en trou (B) cylindrique et **par le fait que** l'on insère dans ce trou (B) cylindrique un taraud (15) jusqu'à une position prédéterminée, lequel taraud, vu dans la direction axiale depuis sa face avant, présente, les unes à côté des autres, une partie tranchante de centrage (17), une partie tranchante (19) contiguë à celle-ci et destinée à réaliser le tronçon taraudé (8) conique de la portion de serrage (3), et une partie tranchante (21) contiguë à celle-ci et destinée à réaliser le tronçon taraudé (7) cylindrique dans la portion d'entraînement (2), la partie tranchante (21) pour réaliser le tronçon taraudé (7) cylindrique dans la portion d'entraînement (2) présentant des dents (22) qui s'étendent dans la direction longitudinale (L), la partie tranchante (19) pour réaliser le tronçon taraudé (8) conique de la portion de serrage (3) présentant des dents (26) qui sont inclinées par rapport à la direction longitudinale (L) en formant un premier angle (α1), et la partie tranchante de centrage (17) présentant des dents (30) qui sont inclinées par rapport à la direction longitudinale (L) en formant un deuxième angle (α2), le taraud (15), au cours d'une première étape, étant inséré dans le trou (B) jusqu'à la position prédéterminée, les dents (22) de la partie tranchante pour réaliser le tronçon taraudé (7) cylindrique dans la portion d'entraînement (2) et les dents (26) de la partie tranchante (19) pour réaliser le tronçon taraudé (8) conique de la portion de serrage (3) se reproduisant respectivement dans la portion d'entraînement (2) et dans la portion de serrage (3), et le taraud (15), au cours d'une étape subséquente, étant tourné en sens inverse pour sortir du trou (B) de l'écrou.

2. Procédé selon la revendication 1, **caractérisé par le fait que**, dans la position prédéterminée, les dents (22) de la partie tranchante (21) pour réaliser le tronçon taraudé (7) cylindrique sont disposées dans la totalité de la portion d'entraînement (2) et les dents (26) de la partie tranchante (19) pour réaliser le tronçon taraudé (8) conique sont disposées dans la totalité de la portion de serrage (3).

3. Procédé selon la revendication 1, **caractérisé par le fait que**, dans la position prédéterminée, les dents (22) de la partie tranchante (21) pour réaliser le tronçon taraudé (7) cylindrique dans la portion d'entraînement (2) s'engagent également en partie dans la portion de serrage (3).

4. Procédé selon la revendication 1, **caractérisé par le fait que**, dans la position prédéterminée, les dents (26) de la partie tranchante (19) pour réaliser le tronçon taraudé (8) conique de la portion de serrage (3) s'engagent au moins en partie également dans la portion d'entraînement (2).

5. Taraud pour la mise en oeuvre du procédé selon une des revendications 1 à 4, **caractérisé par le fait qu'**il comporte, vu depuis sa face avant, les unes à la suite des autres, une partie tranchante de centrage (17), une partie tranchante (19) pour réaliser le tronçon taraudé (8) conique de la portion de serrage (3) et une partie tranchante (21) pour réaliser le tronçon taraudé (7) cylindrique dans la portion d'entraînement (2), les dents (22) de la partie tranchante (21) pour réaliser le tronçon taraudé (7) cylindrique dans la portion d'entraînement (2) s'étendant dans la direction longitudinale (L) du taraud (15), les dents (26) de la partie tranchante (19) pour réaliser le tronçon taraudé (8) conique de la portion de serrage (3) s'étendant le long d'une ligne convergeant en direction de la face avant, et les dents (30) de la partie tranchante de centrage (17) s'étendant le long d'une autre ligne convergeant en direction de la face avant.

6. Taraud selon la revendication 5, **caractérisé par le fait que** les dents (22) de la partie tranchante (21) pour réaliser le tronçon taraudé (7) cylindrique de la portion d'entraînement (2) présentent des cercles de tête (23) et des cercles de pied (25) qui s'étendent dans la direction longitudinale (L) du taraud (15).

7. Taraud selon la revendication 5 ou 6, **caractérisé par le fait que** les dents (26) de la partie tranchante (19) pour réaliser le tronçon taraudé (8) conique de la portion de serrage (3) présentent des cercles de tête (27) se situant sur une surface enveloppe imaginaire qui est inclinée par rapport à la direction longitudinale (L) du taraud (15) en formant un premier angle (α1).

8. Taraud selon la revendication 7, **caractérisé par le fait que** la hauteur des dents (26) de la partie tranchante (19) pour réaliser le tronçon taraudé (8) conique de la portion de serrage (3) diminue en direction de la face avant du taraud (15).

9. Taraud selon la revendication 7, **caractérisé par le fait que** les cercles de pied (29) des dents (26) de la partie tranchante (19) pour réaliser le tronçon taraudé (8) conique de la portion de serrage (3) sont disposés sur une surface enveloppe inclinée par rapport à la direction longitudinale (L) du taraud en formant un premier angle (α1).

10. Taraud selon une des revendications 6 à 9, **caractérisé par le fait que** les dents (30) de la partie tranchante de centrage (17) possèdent des cercles de tête (31) qui se situent sur une surface enveloppe imaginaire inclinée par rapport à la direction longitudinale (L) du taraud (15) en formant un deuxième angle (α2).

11. Taraud selon la revendication 10, **caractérisé par le fait que** le deuxième angle (α2) est plus grand que le premier angle (α1).

12. Taraud selon la revendication 10 ou 11, **caractérisé par le fait que** les dents (30) de la partie tranchante de centrage (17) présentent une hauteur de dent diminuant en direction de la face avant.

13. Taraud selon une des revendications 10 à 12, **caractérisé par le fait que** les cercles de pied (33) des dents (30) de la partie tranchante de centrage (17) se situent sur une surface enveloppe imaginaire qui est inclinée par rapport à la direction longitudinale (L) du taraud (15) en formant un troisième angle (α3).

14. Taraud selon la revendication 13, **caractérisé par le fait que** le troisième angle correspond à l'angle (α1).

15. Ecrou fabriqué suivant le procédé selon une des revendications 1 à 4, **caractérisé par le fait qu'**il comprend une portion de serrage (3), une portion d'entraînement (2), réalisée d'une seule pièce avec la portion de serrage (3), et une zone d'appui (5) aménagée sur le côté de la portion d'entraînement (2) éloigné de la portion de serrage (3), un tronçon taraudé (7) cylindrique, qui s'étend au moins en partie sur la portion d'entraînement (2), étant aménagé dans un trou (B), dans la région de la portion d'entraînement (2), et un tronçon taraudé (8) conique, qui s'étend au moins en partie sur la portion de serrage (3), étant aménagé dans la portion de serrage (3), lesdits tronçons étant réalisés au cours d'une étape unique par insertion d'un taraud (15) selon une des revendications 5 à 13, dans un trou (B) cylindrique, jusqu'à une position prédéterminée, la portion de serrage (3) étant conformée en manchon et délimitée sur son pourtour par une surface enveloppe (9) conique, dont le sommet est éloigné de la zone d'appui (5), et la portion de serrage présentant plusieurs échancrures (11) qui sont orientées dans la direction axiale, sont réparties sur le pourtour et s'étendent dans la direction axiale au moins jusqu'à la portion d'entraînement (2).

16. Ecrou selon la revendication 14, **caractérisé par le fait que** la portion d'entraînement (2) comporte radialement à l'extérieur des éléments de déformation (9') réguliers, sur lesquels peut venir en prise un outil pour faire tourner l'écrou sur une vis.
